# EUROPEAN PATENT SPECIFICATION

(11) **EP 3 154 364 B1**
(45) Date of publication and mention of the grant of the patent: **05.07.2023**
(21) Application number: 15811288.8
(22) Date of filing: 11.06.2015
(51) Int. Cl.: A23G 4/02, A23G 4/20, A23G 4/06, A23G 3/34

(54) **METHOD OF APPLYING FLAVOR TO CHEWING GUM AND OTHER EDIBLE SUBSTRATES**
VERFAHREN ZUM AUFBRINGEN VON GESCHMACK AUF KAUGUMMI UND ANDERE ESSBARE SUBSTRATE
PROCÉDÉ D'APPLICATION D'UN ARÔME À UNE GOMME À MÂCHER ET À D'AUTRES SUBSTRATS COMESTIBLES

(30) Priority: 12.06.2014 US 201462011027 P
(43) Date of publication of application: 19.04.2017
(73) Proprietor: International Flavors & Fragrances Inc., New York, NY 10019 (US)
(72) Inventor: CELESTE, Salvatore, A., Peabody, MA 01960 (US)
(74) Representative: FRKelly
(86) International application number: PCT/US2015/035410
(87) International publication number: WO 2015/200000

(56) References cited:
- WO-A1-88/08672
- WO-A1-97/01962
- WO-A1-2008/049119
- WO-A1-2013/119627
- WO-A2-2008/003069
- WO-A2-2008/035313
- WO-A2-2013/049800
- US-A- 3 962 463
- US-A1- 2002 164 397
- US-A1- 2004 175 463
- US-A1- 2007 231 427
- US-A1- 2009 117 056
- US-A1- 2010 055 264

## Description

### BACKGROUND OF THE INVENTION

WO 2013/049800 discloses a method and a system for printing indicia on the surface of a chewing gum sheet. It is disclosed that ink is used to produce the indicia, wherein the ink is composed of a pigment, a vehicle and a binder, and can optionally include extenders and rewetting agents.

US2007/0231427 discloses a multi-layer confectionary product prepared with an apparatus capable of spraying a molten gum base layer onto an edible substrate layer and, wherein the molten gum base layer may include an organoleptic composition and an edible ink-indicia.

It is generally accepted in the food industry that chewing gum typically has
substantially more flavor oil incorporated into it than would otherwise be necessary to provide a satisfactory flavor profile relative to other edible substrates. The reason for this is that up to 60% of the flavor oils incorporated into the gum base remain trapped within the gum base matrix, existing as disperse minute droplets of oil that resist release during the mastication process. This is usually perceived by the user as a delay of flavor release and the gum having little or no flavor when first placed in the mouth and chewed, or perceived as a significant loss of flavor in a relatively short period of time.

In order to eliminate this release delay and facilitate an extended flavor delivery, up to twice the necessary amount of flavoring is typically added to most gum bases to compensate for the loss due to the trapped flavor component. This causes a negative economic impact on the cost of the product, because the volume of the most expensive ingredient, which is typically the flavor oil, must be more than doubled to achieve an acceptable flavor profile, causing an otherwise needless expense.

There exists a need for means of effectively and conveniently delivering flavors, as well as other organoleptic modifiers or ingredients, beyond that of simple incorporation into the gum base. In particular, needed are methods of disposing or otherwise incorporating flavors onto an edible substrate such as chewing gum, in a convenient and cost effective manner.

### SUMMARY OF THE INVENTION

Disclosed herein are novel methods that are useful for delivering or disposing one or more compositions (e.g., a flavoring composition) onto the surface of a substrate (e.g., an edible substrate). Such methods may be employed to conveniently apply, print or otherwise dispose, for example, one or more flavors onto an edible substrate, thereby imparting flavoring characteristics to the substrate.

In certain aspects, provided herein are methods of disposing a composition (e.g., a flavoring composition) onto a surface of a substrate, such methods comprising a step of printing the composition onto a surface of the substrate, wherein the substrate comprises an edible substrate (e.g., chewing gum), and wherein the composition comprises one or more flavors. In certain embodiments, the one or more flavors are in the form of an oil (e.g., an encapsulated volatile oil).

The compositions disposed (e.g., printed) onto the substrate in accordance with certain aspects of the invention may be provided in the form of a slurry. The slurry comprises one or more polar solvents. For example, the one or more polar solvents may be selected from the group consisting of water, ethanol, ethyl acetate, propylene glycol and combinations thereof. In certain embodiments, the one or more polar solvents are not water.

In certain embodiments, the composition(s) disposed onto the substrate further comprises a binder. In certain aspects, the binder comprises one or more excipients, e.g., one or more excipients selected from the group consisting of citric acid, mannitol, calcium stearate, sucralose, polyvinyl acetate, vinylpyrrolidone-vinyl acetate copolymer, hydroxypropylcellulose, Klucel, Kollidon VA64 and combinations thereof. In certain embodiments, the binder comprises an amphiphilic polymer. In certain embodiments, the binder is water soluble. In certain embodiments, the binder is combined (e.g., mixed or blended) with the one or more polar solvents to form the composition. In certain embodiments, the binder is combined with one or more flavors and is prepared as a dry mix.

In certain embodiments, the compositions disclosed herein are useful for effectuating or facilitating the delivery or disposition of one or more flavors onto a surface of the substrates disclosed herein. Accordingly, the compositions comprise one or more flavors (e.g., one or more flavors in the form of an oil). Additionally, in certain aspects the composition further comprises one or more colorants (e.g., FD&C Green Lake or FD&C Yellow #6).

The methods disclosed herein may be practiced to facilitate the disposition of the compositions onto any number of substrates. In certain embodiments, the substrate is an edible substrate, for example, a stick or slab of chewing gum. Such compositions are preferably disposed onto the substrate by one or more printing means (e.g., using a printer). In certain aspects, the printing is non-contact printing. Alternatively, in certain aspects the printing is contact printing (e.g., one or more of stenciling and screen printing). In some embodiments, disposing the composition onto the substrate results in a three-dimensional relief layer on the substrate.

Also disclosed herein is the further disposition of one or more additional compounds onto the substrate. For example, once the composition has been disposed onto the substrate, one or more additional compounds may be disposed thereon. In certain embodiments, the one or more additional compounds are selected from the group consisting of flavors, flavor modifiers, medicinal preparations, dentifrices, preservatives and colorants. In certain embodiments, the one or more additional compounds (e.g., colorants) are disposed onto the substrate by printing.

Also disclosed herein are methods of disposing a flavor composition onto a surface of a substrate, the method comprising printing the composition onto a surface of the substrate; wherein the substrate comprises an edible substrate; wherein the composition is in the form of a slurry comprising one or more polar solvents, binders and flavors; and wherein the edible substrate comprises a chewing gum.

In some embodiments, the polar solvents are selected from the group consisting of water, ethanol, ethyl acetate, propylene glycol and combinations thereof. In certain aspects, the polar solvent is not water. In certain embodiments, the polar solvent comprises ethanol and ethyl acetate. In certain aspects, the polar solvent comprises ethanol and propylene glycol. In certain aspects, the binder comprises one or more excipients selected from the group consisting of citric acid, mannitol, calcium stearate, sucralose, polyvinyl acetate, vinylpyrrolidone-vinyl acetate copolymer, hydroxypropylcellulose, Klucel, Kollidon VA64 and combinations thereof. In certain aspects, the binder comprises citric acid, mannitol, calcium stearate and sucralose. In certain embodiments, the binder comprises mannitol, sucralose and calcium stearate. In certain aspects, the binder has a particle size less than about 100µm. In certain aspects, the binder has a particle size between about 30 and about 75µm.

In some embodiments, disposing the composition onto the substrate results in a three-dimensional relief layer on the substrate.

Also disclosed herein is the further disposition of one or more additional compounds onto the substrate. For example, in certain aspects such one or more additional compounds are selected from the group consisting of flavors, flavor modifiers, medicinal preparations, dentifrices, preservatives and colorants. The one or more additional compounds may be disposed onto the substrate by printing.

In certain aspects, the inventions disclosed herein relate to a substrate onto which a composition has been applied, printed or otherwise disposed in accordance with the teachings set forth herein. For example, in certain embodiments, disclosed herein are edible substrates (e.g., chewing gum) onto which one or more flavor compositions have been printed or otherwise disposed.

The above discussed, and many other features and attendant advantages of the present inventions will become better understood by reference to the following detailed description of the invention.

### BRIEF DESCRIPTION OF THE DRAWINGS

**FIG. 1** illustrates a printing apparatus used to print a composition onto the surface of an edible substrate (chewing gum), according to an embodiment of the present invention.
**FIG. 2** depicts an edible substrate (chewing gum) onto which has been printed a flavor composition, according to an embodiment of the present invention.
**FIG. 3** provides an illustrative example of a stenciled pattern for printing a composition onto the surface of a substrate, according to an embodiment of the present invention.
**FIG. 4** provides an illustrative example of a pigment patterned composition printed onto a surface of an edible substrate (a stick or slab of gum), according to an embodiment of the present invention.
**FIG. 5** provides an illustrative example of a pigment patterned composition printed onto a surface of an edible substrate (a stick or slab of gum), according to an embodiment of the present invention.
**FIG. 6** provides an illustrative example of a pigment patterned composition printed onto a surface of an edible substrate (a stick or slab of gum), according to an embodiment of the present invention.
**FIG. 7** illustrates a pigment patterned composition printed onto a surface of an edible substrate (a stick or slab of gum), according to an embodiment of the present invention.
**FIG. 8** provides an illustrative example of a pigment patterned composition disposed onto a surface of an edible substrate (a stick or slab of gum), according to an embodiment of the present invention.
**FIG. 9** depicts an illustrative example of a pigment patterned composition disposed onto the surface of multiple edible substrates (sticks or slabs of gum), according to an embodiment of the present invention and demonstrates the color resolution attainable with the composition and/or methods described herein.

### DETAILED DESCRIPTION OF THE INVENTION

The invention relates to a method of disposing a composition onto a surface of an edible substrate, the method comprising (a) printing, via contact or non-contact printing, the composition onto the surface of the substrate; wherein the composition is in the form of a slurry and comprises a dry mix having a particle size between 30-75µm, the dry mix comprising one or more flavors, and being dispersed in one or more polar solvents wherein none of the components of the dry mix are dissolved in the one or more polar solvents; and one or more film-forming amphiphilic polymers or co-polymers dissolved in said one or more polar solvents; and wherein the one or more film-forming amphiphilic polymers or co-polymers and the one or more polar solvents are selected from the group consisting of: i. ethanol and ethyl acetate as polar solvents, and polyvinyl acetate and hydroxypropylcellulose as film-forming polymers, and ii. ethanol and propylene glycol as polar solvents, and vinylpyrrolidone-vinyl acetate copolymer as film-forming copolymer; and (b) evaporating the polar solvents of the composition from the surface of the substrate.

The present invention also relates also composition for disposing onto a surface of an edible substrate, the composition being in the form of a slurry and comprising a dry mix having a particle size between 30-75µm, the dry mix comprising one or more flavors, and being dispersed in one or more polar solvents; and one or more film-forming amphiphilic polymers or co-polymers dissolved in said one or more polar solvents; and wherein the one or more film-forming amphiphilic polymers or co-polymers and the one or more polar solvents are selected from the group consisting of: i. ethanol and ethyl acetate as polar solvents, and polyvinyl acetate and hydroxypropylcellulose as film-forming polymers, and ii. ethanol and propylene glycol as polar solvents, and vinylpyrrolidone-vinyl acetate copolymer as film-forming copolymer; and and wherein none of the components of the dry mix are dissolved in the one or more polar solvents.

Disclosed herein are methods of applying or otherwise disposing compositions (e.g., flavor compositions) onto the surface of one or more substrates and, in particular edible substrates such as chewing gums. Also disclosed herein are substrates, such as chewing gums, onto which have been applied or otherwise disposed the compositions and/or flavorings disclosed herein. The methods disclosed herein advantageously extend the delivery of flavors from, for example, chewing gum, using less flavoring than has traditionally been added to chewing gum bases. In certain aspects, the inventions disclosed herein are suitable for facilitating the disposition of a number of compositions onto any number of substrates and edible substrates, including, for example chewing gum.

Unlike most edible confections that are completely dissolved in the mouth or otherwise fully consumed, chewing gum is masticated in the mouth until such time that the flavor component has apparently been depleted, at which time the chewing gum is then typically expectorated. Once deposited into the mouth of a user, a dry stick of chewing gum must first be moistened with saliva to initiate the release of the flavor components. This unfortunately results in a significant delay in flavor perception as the first few chews are essentially tasteless until some of the flavor oils are released. To compensate for this inefficiency, gum manufacturers add nearly double the amount of flavor oils to the gum base than would otherwise be necessary if the flavor were delivered effectively.

The methods disclosed herein address these concerns in a way that is not only cost effective and efficient, but adds a unique aesthetic value to the resulting product. In certain aspects, the methods disclosed herein comprise a step of applying, printing or otherwise disposing a composition (e.g., a flavor composition) onto a surface of a substrate (e.g., an edible substrate, such as a slab or stick of chewing gum). The composition to be applied, printed or otherwise disposed onto the substrate comprises one or more flavors, one or more binders and one or more solvents.

Such composition may be prepared by reducing all of the components of the composition or binder to a dry, free-flowing powder. In certain aspects, the composition (e.g., a flavor composition) may be prepared as a dry, powder-form mixture of sweeteners, acids, (such a citric acid to impart a sour note) encapsulated flavor oils, (including fruit, mint and other suitable oils) and other flavor modifiers, enhancers or preservatives. In certain aspects, this "dry mix," which may be substantially hygroscopic and subject to hydration and rapid deterioration, must be protected from the environment in order to achieve an acceptable shelf-life and maintain the desired flavor profile. Therefore, in certain aspects the dry mix must be further encapsulated with a protective medium, in this case a co-polymer dissolved in a solvent, that will also allow the material to be printed in a manner similar to ink or paint. Further, the aforementioned co-polymer must be amphiphilic in order to facilitate the application of the dry-mix and the composition onto the substrate. In particular, the solvent medium into which the dry-mix is added will contain ingredients that are water soluble. Therefore, a solvent other than water must be used in conjunction with the co-polymer to avoid premature dissolving of the flavor-related ingredients during the application process. For example, one or more polymers or co-polymers may be dissolved in a polar solvent, thereby creating a film-forming solution. Since the flavor related ingredients are only water soluble, including the outer-phase encapsulation materials used to protect the flavor oils, they are easily and conveniently integrated into the polymer-polar solvent solution without any deterioration or dissolution. This creates a composition in the form of a printable slurry or composite composition that may be applied, printed or otherwise disposed onto a surface of an edible substrate, where the polar solvent is subsequently evaporated away leaving the dry mix components of the composition securely affixed to the substrate and enveloped in a film of the polymer or co-polymer. Since the polymer or co-polymer is amphiphilic, upon contact with water or saliva, the polymer dissolves along with the dry mix components and the entirety of the printed composition is delivered in the mouth of a user. This type of flavor release is immediate and resolves the delayed flavor sensation experienced with conventional chewing gum. In addition, the entire flavor complex is released in the mouth of the user, as opposed to being irretrievably trapped within the gum base, thus eliminating the need to add more flavor oil to compensate for the loss.

In certain aspects, one or more components of the binder may require comminuting to a particular particle size (e.g., less than about 100µm). In certain aspects, the liquid components of the composition, such as the flavor oils, can be converted to a powder by several methods, the most conventional being encapsulated by means of spray drying. This would also apply to any other ingredients or actives that would normally be present in liquid form. These powderized excipients that form the composition may then be homogeneously mixed and introduced into a liquid carrier or solvent, analogous to paint or ink. In certain aspects, this carrier or solvent, comprised of an edible, film-forming polymer is amphiphilic, while simultaneously not particularly hygroscopic. That is to say that it must be soluble in a variety of solvents, one of which may be water and the other a protic or aprotic polar solvent.

Whereas the excipients that comprise the binder may be all soluble in water (including the outer-phase of the encapsulated oil), it is necessary that the carrier-binder matrix use a solvent other than water so as not to dissolve the ingredients prematurely during application. Accordingly, in certain aspects, the solvent is not water. Once the excipients that comprise the binder are fully integrated into the solvent to form a composition having a suitable particle size throughout, that composition may then be applied or otherwise disposed (e.g., printed) onto the substrate by any conventional methods such as screen-printing, stenciling, gravure, etc. In certain aspects, if the particle size is small enough, even non-contact printing such as inkjet may be employed.

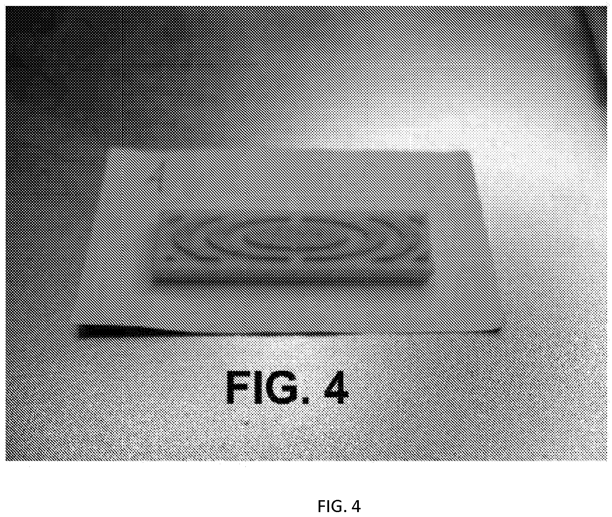

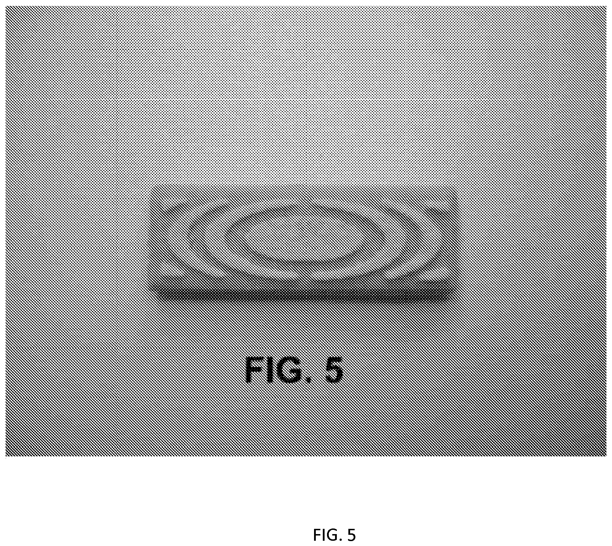

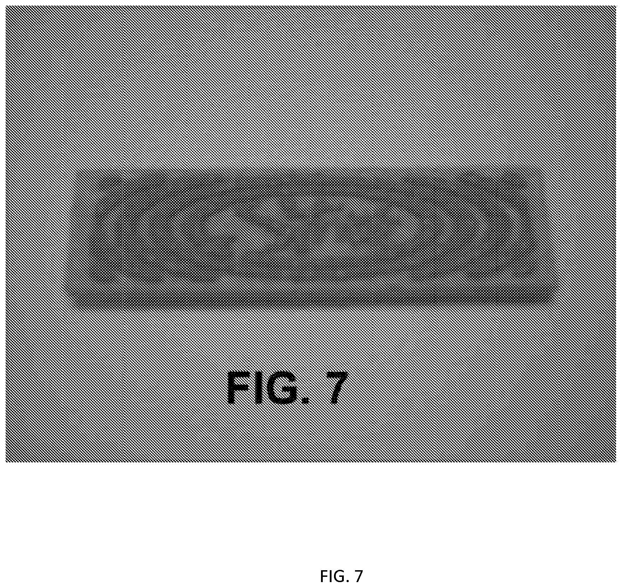

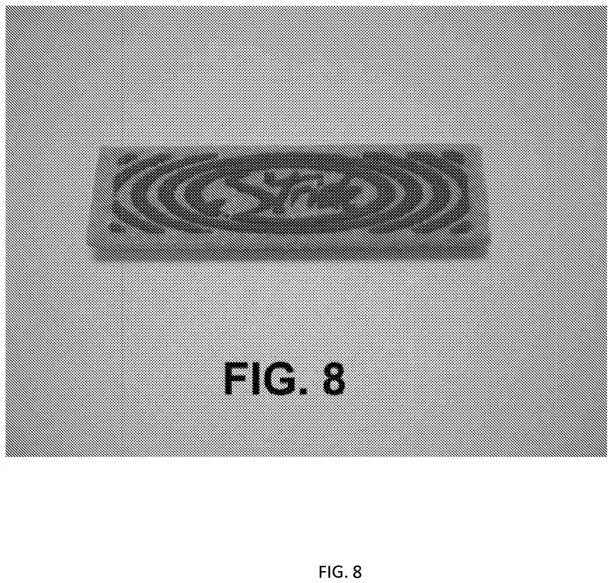

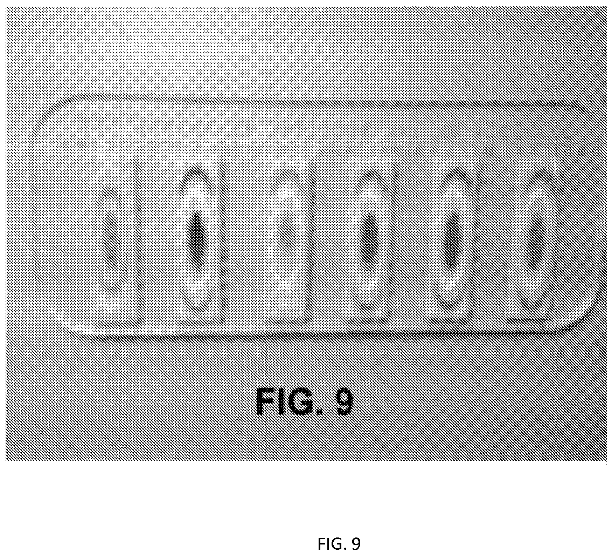

In certain aspects, the outer-phase of the encapsulated flavors can also be adjusted for extended latent release in order to provide for a longer-lasting flavor experience. Depending on the amount or dosage of the flavoring required, the printed material may appear as a three-dimensional relief which is a generally desirable aesthetic attribute that may be colorized in a variety of ways including the addition of dyes directly into the polymer carrier, colorized dry-mix components or the addition of color as a secondary printing operation applied on top of the functional flavor layer. This binary printing process allows the flavoring material to be applied in the form of three-dimensional, full color images or designs. Accordingly, in certain aspects, the compositions may be disposed onto the surface of the substrate in a three-dimensional pattern. The relative height of the three-dimensional pattern is directly associated with the volume or amount of flavor desired and the printable surface area available. The effect is generally perceived as a desirable aesthetic attribute. In certain aspects, the composition may be colorized in a variety of ways including but not limited to, colored ingredients, the addition of takes and dyes, colorization of the carrier-binder or by a secondary printing process later disclosed in the preferred embodiment description, as illustrated in **FIGS. 4-9****.**

Once the printed composition is applied to the substrate (e.g., an edible chewing gum substrate), the solvent is evaporated and a polymer film binds the ingredients to the surface and the film-forming properties envelop the entirety of the print in a protective coating. Because the film former is amphiphilic, it will subsequently be dissolved along with the other ingredients upon contact with saliva and the flavor release is immediately affected. If desired, the release may be prolonged by encapsulating the flavor components in an outer-phase material conducive to time, temperature or pH release.

It is to be understood that the inventions disclosed herein are not limited in their application to the details set forth in the description or as exemplified. The invention encompasses other embodiments and is capable of being practiced or carried out in various ways. Also, it is to be understood that the phraseology and terminology employed herein is for the purpose of description and should not be regarded as limiting.

While certain compositions, methods and assays of the present invention have been described with specificity in accordance with certain embodiments, the following examples serve only to illustrate the methods and compositions of the invention and are not intended to limit the same. The articles "a" and "an" as used herein in the specification and in the claims, unless clearly indicated to the contrary, should be understood to include the plural referents. Claims or descriptions that include "or" between one or more members of a group are considered satisfied if one, more than one, or all of the group members are present in, employed in, or otherwise relevant to a given product or process unless indicated to the contrary or otherwise evident from the context. The invention includes embodiments in which exactly one member of the group is present in, employed in, or otherwise relevant to a given product or process. The invention also includes embodiments in which more than one, or the entire group members are present in, employed in, or otherwise relevant to a given product or process. Furthermore, it is to be understood that the invention encompasses all variations, combinations, and permutations in which one or more limitations, elements, clauses, descriptive terms, etc., from one or more of the listed claims is introduced into another claim dependent on the same base claim (or, as relevant, any other claim) unless otherwise indicated or unless it would be evident to one of ordinary skill in the art that a contradiction or inconsistency would arise. Where elements are presented as lists, (e.g., in Markush group or similar format) it is to be understood that each subgroup of the elements is also disclosed, and any element(s) can be removed from the group. It should be understood that, in general, where the invention, or aspects of the invention, is/are referred to as comprising particular elements, features, etc., certain embodiments of the invention or aspects of the invention consist, or consist essentially of, such elements, features, etc. For purposes of simplicity those embodiments have not in every case been specifically set forth in so many words herein. It should also be understood that any embodiment or aspect of the invention can be explicitly excluded from the claims, regardless of whether the specific exclusion is recited in the specification.

### EXAMPLES

### Example 1

A printable slurry composition was created that comprised a plurality of powdered sweeteners, actives, colorants, flavor modifiers, character modifiers, emulsifiers and an encapsulated flavor homogeneously integrated into a fluid binder containing a film-forming polymer and a polar processing solvent.

A dry mix was prepared by combining by weight in a powder blending vessel the following ingredients:

| | |
|---|---|
| Citric Acid | 42% |
| Mannitol | 47.22% |
| Sucralose | 4.22% |
| Calcium Stearate | 1.85% |
| FD&C Yellow #6 | 0.34% |
| Tropical Fruit Flavor | 4.22% |

A large particle size results in a gritty, difficult to print material. Accordingly, each of the ingredients were comminuted to a size between 30 -75 microns to create a smooth consistency suitable for printing. The flavor component is a commercially available spray-dried product having a flavor oil inner phase and a maltodextrin outer-phase. This may be any desired flavor and may be adjusted to suit taste or other organoleptic characteristics.

Next, a binder was prepared by dissolving the ingredients identified below in the two polar solvents in a mixing vessel suitable for mixing liquids at low shear:

| | |
|---|---|
| Ethanol | 80ml |
| Ethyl Acetate | 20ml |
| Klucel | 3.5g |
| PVAc | 0.5g |

Next, a slurry was created by combing the dry-mix with the binder in a mixing vessel to form a slurry of smooth consistency and paint-like viscosity. The viscosity may be varied by add-mixing more or less dry-mix to the binder or more binder solution if thinning is required. It must be noted that none of the components of the dry-mix are soluble in the binder solution.

### Example 2

A second printable slurry was created that comprised a plurality of powdered sweeteners, actives, colorants, flavor modifier. First, the dry mix was prepared by combining by weight in a powder blending vessel, the following ingredients:

| | |
|---|---|
| Spearmint Flavor | 24.50% |
| Mannitol | 68.61% |
| Sucralose | 1.96% |
| Calcium Stearate | 1.96% |
| FD&C Green Lake | 0.52% |
| Menthol | 2.45% |

A large particle size results in a gritty, difficult to print material. Accordingly, each of the ingredients were comminuted to a size between 30 -75 microns for best results to create a smooth consistency suitable for printing. The flavor component is a commercially available spray-dried product having a flavor oil inner phase and a maltodextrin outer-phase. The menthol is encapsulated as well to preserve the volatile oils. This may be any desired mint flavor and may be adjusted to suit taste or other organoleptic characteristics.

Next, a binder was prepared by dissolving the following ingredients in the two polar solvents in a mixing vessel suitable for mixing liquids at low shear:

| | |
|---|---|
| Ethanol | 80ml |
| Kollidon VA64 | 4.0g |
| Propylene Glycol | 5ml |

Next, a slurry was created by combing the dry-mix with the binder in a mixing vessel to form a slurry of smooth consistency and paint-like viscosity. The viscosity may be varied by add-mixing more or less dry-mix to the binder or more binder solution if thinning is required. It must be noted that none of the components of the dry-mix are soluble in the binder solution.

### Example 3

Regardless of the formulation, the printing process is substantially identical. Once the printable slurry prepared in accordance with the foregoing examples is of the proper consistency, the slurry is transferred to the appropriate printing apparatus where it is further processed much like a paint or plastisol-type ink. In this instance, a stencil printing application is most beneficial to provide a sufficient quantity of material and achieve the desired 3-D effect.

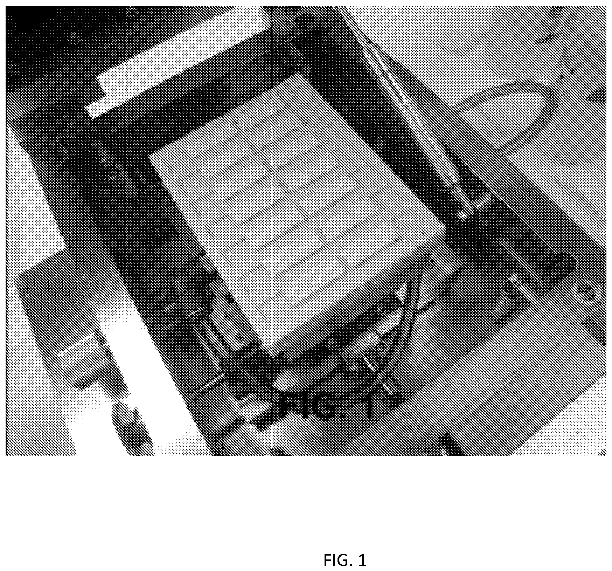

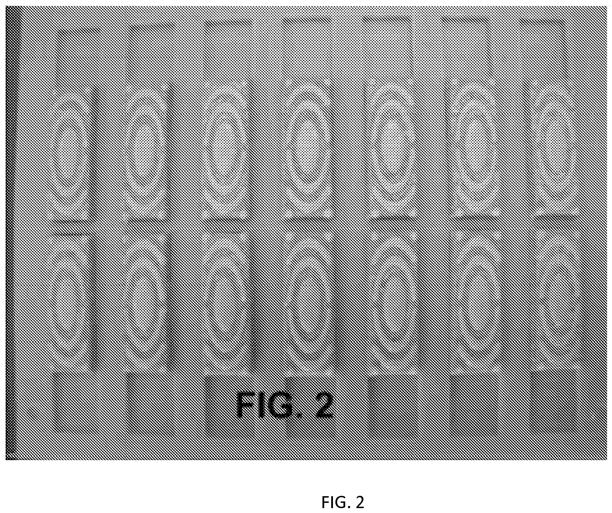

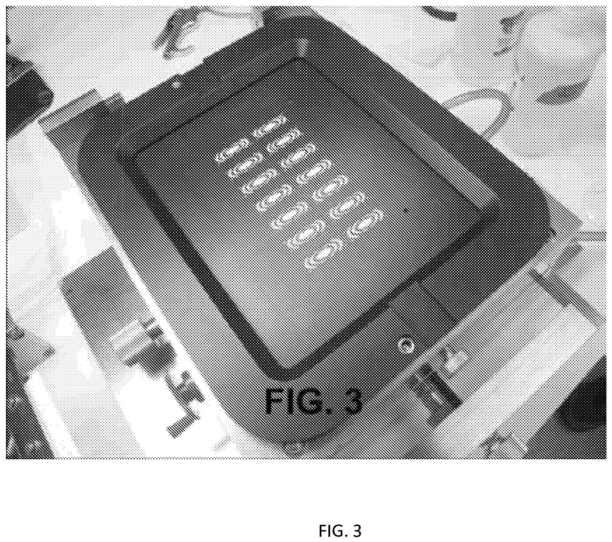

The printing apparatus in this example is modified design of an conventional semi-automated stencil printer comprised of a multi-axis platform (**FIG. 1**) having adjustable movement in 4 directions (i.e., X,Y,Z and Theta) to facilitate registration during the printing process. Interlocked on that platform, is a removable platen having a recess or series or recesses machined into the face thereof to provide a cavity, best described as a "negative" of the gum slab or slabs into which the actual gum product will be subsequently placed and held securely in position during the printing process, as illustrated in **FIG. 2****.** Directly above the platen and arranged in a "laminate" position on a hinged frame is held a metal stencil plate having an image or design stencil cut by machine or laser to allow the slurry to be stenciled on the gum slabs held in the platen below, as shown in **FIG. 3****.**

Gum, of a predetermined size was placed either in strip or individual slabs into the holding platen. The stencil was lowered into direct contact with the gum and the multi-axis table holding the platen is manipulated into registered position ensuring that the stenciled image is properly aligned on the printing surface. Once positioned, the table is locked in place and a volume of slurry sufficient for a single print cycle is placed on the holding area adjacent to the stencil openings. A squeegee or other edged device suitable for spreading the slurry across the stencil is then pulled manually or by automated device thus dragging a bead of material perpendicularly over the stencil openings. The hinged stencil frame is then lifted in a radial arch away from the operator and the newly printed gum is then removed, as shown in **FIG. 4****.** At this point the newly printed gum or gum slab, which may be air or mechanically dried, are ready for packaging.

The resulting product has affixed thereto, an amount of encapsulated flavor or active ingredient and forms a 3-D image in single color or multiple colors and provides for immediate flavor release upon introduction into the mouth and contact with saliva. As further described in Example 4, the 3-D print may incorporate an optional secondary printing operation that would further enhance its appearance with full color images or designs.

### Example 4

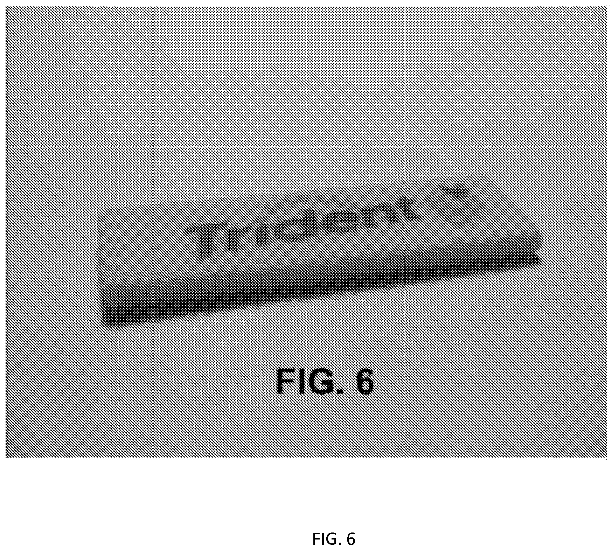

In order to provide color beyond that of adding dyes or lakes to the slurry medium or colorizing the dry-mix components, it is possible to impart color by means of a secondary printing operation. The operation is described as "binary printing" and consists of a printing operation subsequent to the primary printing and application of the flavored material. Once the gum has been imprinted with the above-mentioned slurry, (preferably of a neutral, natural or white color) (**FIG. 6**) a layer of color print may be additionally applied thereon by means of a secondary screen print or even conventional jet-print, as only pigment is applied during this stage. This would be best described as printing an image on top of the 3-D relief created during the first printing process. This method allows for extremely high detail such as photographic images, as well as simple multi-color graphics. It also reduces the amount or colorants needed to create a similar effect if the color were to be integrated into the gum or printable slurry (**FIG. 6**).

The resulting product is a single slab of chewing gum having affixed thereto, an amount of encapsulated flavor or active. The affixed material forms a 3-D image in single color or multiple colors and provides for immediate flavor release upon introduction into the mouth and contact with saliva. The binary printing may be useful for incorporating an optional secondary printing operation that would further enhance its appearance with full color images or designs, as shown in **FIGS. 6-9****.**

### Materials:

Citric acid (anhydrous) was obtained from Jungbunzlauer (Product Code: CAAN1560; CAS#: 77-92-9) and ground to fine powder for use. Mannitol (Pearlitol 50C or Pearlitol 25C), was obtained from Roquette (CAS#: 69-65-8) and the agglomerate was broken down to powder for use. Sucralose (Splenda; CAS#: 56038-13-2) was ground to fine powder for use. Calcium Stearate was obtained from Peter Greven (Product code: Ligamed CPR-2-K; CAS#: 1592-23-0). FD&C yellow #6 aluminum lake high dye (36-42%) was obtained from IFC (CAS#: 2783-94-0). Tropical fruit flavor was obtained from TAKASAGO (Formula#: TAK-031944). Ethanol (anhydrous) 200 proof, USP grade was obtained from Dawn Scientific (Main cat#: 111000200; CAS#: 64-17-5). Ethyl acetate (anhydrous) USP grade was obtained from Dawn Scientific (Main Cat#: 330000000; CAS#: 141-78-6). Hydroxypropylcellulose (KLUCEL EF Pharm) was obtained from Ashland Inc. (CAS#: 9000-64-2). Polyvinyl Acetate (B-30, anhydrous) food grade (CAS#: 9003-20-7). FD&C green shade lake was obtained from IFC (Product#: DB 302). Spearmint flavor was obtained from TAKASAGO (Formula#: TAK-052987). Menthol (MultiSal Menthol) with 31.1% active loading, anhydrous, food grade, was obtained from Salvona (CN #: 9131). Propylene glycol (anhydrous) USP grade was obtained from CLP chemicals (CAS#: 57-55-6). Kollidon (VA-64) was obtained from BASF Corporation, (Vinylpyrrolidone-vinyl acetate copolymer, CAS# 25086-89-9).

## Claims

1. A method of disposing a composition onto a surface of an edible substrate, the method comprising
(a) printing, via contact or non-contact printing, the composition onto the surface of the substrate; wherein the composition is in the form of a slurry and comprises a dry mix having a particle size between 30-75µm, the dry mix comprising one or more flavors, and being dispersed in one or more polar solvents wherein none of the components of the dry mix are dissolved in the one or more polar solvents; and one or more film-forming amphiphilic polymers or co-polymers dissolved in said one or more polar solvents;
and wherein the one or more film-forming amphiphilic polymers or co-polymers and the one or more polar solvents are selected from the group consisting of:
(i) ethanol and ethyl acetate as polar solvents, and polyvinyl acetate and hydroxypropylcellulose as film-forming polymers, and
(ii) ethanol and propylene glycol as polar solvents, and vinylpyrrolidone-vinyl acetate copolymer as film-forming copolymer; and
(b) evaporating the polar solvents of the composition from the surface of the substrate.

2. The method of claim 1, wherein the one or more flavors are in the form of an encapsulated oil.

3. The method of claims 1-2, wherein the composition further comprises one or more excipients selected from the group consisting of citric acid, mannitol, calcium stearate, sucralose and combinations thereof.

4. The method of claims 1-3, wherein the composition further comprises one or more colorants.

5. The method of claim 1, wherein the edible substrate comprises a chewing gum base.

6. The method of claim 1, wherein the contact printing is selected from the group consisting of stenciling and screen printing.

7. The method of claim 1, wherein printing results in a three-dimensional relief layer on the substrate.

8. The method of claim 1, further comprising disposing one or more additional compounds onto the substrate.

9. The method of claim 8, wherein the one or more additional compounds are selected from the group consisting of flavors, flavor modifiers, medicinal preparations, dentifrices, preservatives and colorants.

10. The method of claim 8 or 9, wherein the one or more additional compounds are disposed onto the substrate by printing.

11. A composition for disposing onto a surface of an edible substrate, the composition being in the form of a slurry and comprising a dry mix having a particle size between 30-75µm, the dry mix comprising one or more flavors, and being dispersed in one or more polar solvents; and one or more film-forming amphiphilic polymers or co-polymers dissolved in said one or more polar solvents; and wherein the one or more film-forming amphiphilic polymers or co-polymers and the one or more polar solvents are selected from the group consisting of:
(i) ethanol and ethyl acetate as polar solvents, and polyvinyl acetate and hydroxypropylcellulose as film-forming polymers, and
(ii) ethanol and propylene glycol as polar solvents, and vinylpyrrolidone-vinyl acetate copolymer as film-forming copolymer; and
and wherein none of the components of the dry mix are dissolved in the one or more polar solvents.

12. The composition of claim 11, wherein the one or more flavors are in the form of an encapsulated oil.

13. The composition of claims 11-12, wherein the composition further comprises one or more excipients selected from the group consisting of citric acid, mannitol, calcium stearate, sucralose and combinations thereof.

14. The composition of claims 11-13, wherein the composition further comprises one or more colorants.

15. The composition of claim 11, wherein the edible substrate comprises a chewing gum base.

16. The composition of claim 11, further comprising disposing one or more additional compounds onto the substrate.

17. The composition of claim 16, wherein the one or more additional compounds are selected from the group consisting of flavors, flavor modifiers, medicinal preparations, dentifrices, preservatives and colorants.

## Patentansprüche

1. Verfahren zum Aufbringen einer Zusammensetzung auf einer Oberfläche eines essbaren Substrats, wobei das Verfahren Folgendes umfasst
(a) Drucken der Zusammensetzung durch Kontakt- oder kontaktloses Drucken auf die Oberfläche des Substrats; wobei die Zusammensetzung in der Form einer Aufschlämmung vorliegt und eine Trockenmischung, die eine Teilchengröße zwischen 30-75 um aufweist, wobei die Trockenmischung einen oder mehrere Geschmacksstoffe umfasst und in einem oder mehreren polaren Lösungsmitteln dispergiert ist, wobei keine der Komponenten der Trockenmischung in dem einen oder den mehreren polaren Lösungsmitteln gelöst sind; und ein oder mehrere filmbildende amphiphile Polymere oder Copolymere, die in dem einen oder den mehreren polaren Lösungsmitteln gelöst sind, umfasst;
und wobei das eine oder die mehreren filmbildenden amphiphilen Polymere oder Copolymere und das eine oder die mehreren polaren Lösungsmittel aus der Gruppe ausgewählt sind, die besteht aus:
(i) Ethanol und Ethylacetat als polare Lösungsmittel und Polyvinylacetat und Hydroxypropylcellulose als filmbildende Polymere, und
(ii) Ethanol und Propylenglycol als polare Lösungsmittel und Vinylpyrrolidon-Vinylacetat-Copolymer als filmbildendes Copolymer; und
(b) Verdampfen der polaren Lösungsmittel der Zusammensetzung aus der Oberfläche des Substrats.

2. Verfahren nach Anspruch 1, wobei der eine oder die mehreren Geschmacksstoffe in der Form eines gekapselten Öls vorliegen.

3. Verfahren nach Ansprüchen 1-2, wobei die Zusammensetzung ferner einen oder mehrere Hilfsstoffe umfasst, die aus der Gruppe ausgewählt sind, die aus Zitronensäure, Mannitol, Calciumstearat, Sucralose und Kombinationen davon besteht.

4. Verfahren nach Ansprüchen 1-3, wobei die Zusammensetzung ferner einen oder mehrere Farbstoffe umfasst.

5. Verfahren nach Anspruch 1, wobei das essbare Substrat eine Kaugummibasis umfasst.

6. Verfahren nach Anspruch 1, wobei der Kontaktdruck aus der Gruppe ausgewählt ist, die aus Schablonendruck und Siebdruck besteht.

7. Verfahren nach Anspruch 1, wobei das Drucken eine dreidimensionale Reliefschicht auf dem Substrat ergibt.

8. Verfahren nach Anspruch 1, das ferner Aufbringen einer oder mehrerer zusätzlicher Verbindungen auf dem Substrat umfasst.

9. Verfahren nach Anspruch 8, wobei die eine oder die mehreren zusätzlichen Verbindungen aus der Gruppe ausgewählt sind, die aus Geschmacksstoffen, Geschmacksmodifikatoren, medizinischen Präparaten, Zahnpflegemitteln, Konservierungsmitteln und Farbstoffen besteht.

10. Verfahren nach Anspruch 8 oder 9, wobei die eine oder die mehreren zusätzlichen Verbindungen durch Drucken auf dem Substrat aufgebracht werden.

11. Zusammensetzung zum Aufbringen auf eine Oberfläche eines essbaren Substrats, wobei die Zusammensetzung in der Form einer Aufschlämmung vorliegt und eine Trockenmischung, die eine Teilchengröße zwischen 30-75 um aufweist, wobei die Trockenmischung einen oder mehrere Geschmacksstoffe umfasst und in einem oder mehreren polaren Lösungsmitteln dispergiert ist; und ein oder mehrere filmbildende amphiphile Polymere oder Copolymere, die in dem einen oder den mehreren polaren Lösungsmitteln gelöst sind, umfasst; und wobei das eine oder die mehreren filmbildenden amphiphilen Polymere oder Copolymere und das eine oder die mehreren polaren Lösungsmittel aus der Gruppe ausgewählt sind, die besteht aus:
(i) Ethanol und Ethylacetat als polare Lösungsmittel und Polyvinylacetat und Polypropylenmaterial als filmbildende Polymere, und
(ii) Ethanol und Propylenglycol als polare Lösungsmittel und Vinylpyrrolidon-Vinylacetat-Copolymer als filmbildendes Copolymer; und
und wobei keine der Komponenten der Trockenmischung in dem einen oder den mehreren polaren Lösungsmitteln gelöst sind.

12. Zusammensetzung nach Anspruch 11, wobei der eine oder die mehreren Geschmacksstoffe in der Form eines gekapselten Öls vorliegen.

13. Zusammensetzung nach Ansprüchen 11-12, wobei die Zusammensetzung ferner einen oder mehrere Hilfsstoffe umfasst, die aus der Gruppe ausgewählt sind, die aus Zitronensäure, Mannitol, Calciumstearat, Sucralose und Kombinationen davon besteht.

14. Zusammensetzung nach Ansprüchen 11-13, wobei die Zusammensetzung ferner einen oder mehrere Farbstoffe umfasst.

15. Zusammensetzung nach Anspruch 11, wobei das essbare Substrat eine Kaugummibasis umfasst.

16. Zusammensetzung nach Anspruch 11, die ferner das Aufbringen einer oder mehrerer zusätzlicher Verbindungen auf dem Substrat umfasst.

17. Zusammensetzung nach Anspruch 16, wobei die eine oder die mehreren zusätzlichen Verbindungen aus der Gruppe ausgewählt sind, die aus Geschmacksstoffen, Geschmacksmodifikatoren, medizinischen Präparaten, Zahnpflegemitteln, Konservierungsmitteln und Farbstoffen besteht.

## Revendications

1. Procédé de disposition d'une composition sur une surface d'un substrat comestible, le procédé comprenant
(a) l'impression, par impression avec contact ou sans contact, de la composition sur la surface du substrat ; dans lequel la composition est sous la forme d'une suspension et comprend un mélange sec ayant une taille de particules comprise entre 30 et 75 um, le mélange sec comprenant un ou plusieurs arômes, et étant dispersé dans un ou plusieurs solvants polaires dans lequel aucun des composants du mélange sec n'est dissous dans le ou les solvants polaires ; et un ou plusieurs polymères ou copolymères amphiphiles filmogènes dissous dans ledit ou lesdits solvants polaires ;
et dans lequel le ou les polymères ou copolymères amphiphiles filmogènes et le ou les solvants polaires sont choisis dans le groupe constitué de :
(i) l'éthanol et l'acétate d'éthyle comme solvants polaires, et l'acétate de polyvinyle et l'hydroxypropylcellulose comme polymères filmogènes, et
(ii) l'éthanol et le propylène glycol comme solvants polaires, et le copolymère vinylpyrrolidone-acétate de vinyle comme copolymère filmogène ; et
(b) l'évaporation des solvants polaires de la composition de la surface du substrat.

2. Procédé selon la revendication 1, dans lequel le ou les arômes se présentent sous la forme d'une huile encapsulée.

3. Procédé selon les revendications 1 et 2, dans lequel la composition comprend en outre un ou plusieurs excipients choisis dans le groupe constitué de l'acide citrique, le mannitol, le stéarate de calcium, le sucralose et leurs combinaisons.

4. Procédé selon les revendications 1 à 3, dans lequel la composition comprend en outre un ou plusieurs colorants.

5. Procédé selon la revendication 1, dans lequel le substrat comestible comprend une base de gomme à mâcher.

6. Procédé selon la revendication 1, dans lequel l'impression par contact est choisie dans le groupe constitué d'un pochoir et d'une sérigraphie.

7. Procédé selon la revendication 1, dans lequel l'impression produit une couche en relief tridimensionnelle sur le substrat.

8. Procédé selon la revendication 1, comprenant en outre la disposition d'un ou plusieurs composés supplémentaires sur le substrat.

9. Procédé selon la revendication 8, dans lequel le ou les composés supplémentaires sont choisis dans le groupe constitué d'arômes, de modificateurs d'arôme, de préparations médicinales, de dentifrices, de conservateurs et de colorants.

10. Procédé selon la revendication 8 ou 9, dans lequel le ou les composés supplémentaires sont disposés sur le substrat par impression.

11. Composition à disposer sur une surface d'un substrat comestible, la composition étant sous la forme d'une suspension et comprenant un mélange sec ayant une taille de particules comprise entre 30 et 75 um, le mélange sec comprenant un ou plusieurs arômes, et étant dispersé dans un ou plusieurs solvants polaires ; et un ou plusieurs polymères ou copolymères amphiphiles filmogènes dissous dans ledit ou lesdits solvants polaires ; et dans laquelle le ou les polymères ou copolymères amphiphiles filmogènes et le ou les solvants polaires étant choisis dans le groupe constitué de :
(i) l'éthanol et l'acétate d'éthyle comme solvants polaires, et l'acétate de polyvinyle et l'hydroxypropylcellulose comme polymères filmogènes, et
(ii) l'éthanol et le propylène glycol comme solvants polaires, et le copolymère vinylpyrrolidone-acétate de vinyle comme copolymère filmogène ; et
et dans laquelle aucun des composants du mélange sec n'est dissous dans le ou les solvants polaires.

12. Composition selon la revendication 11, dans laquelle le ou les arômes se présentent sous la forme d'une huile encapsulée.

13. Composition selon les revendications 11 et 12, dans laquelle la composition comprend en outre un ou plusieurs excipients choisis dans le groupe constitué de l'acide citrique, le mannitol, le stéarate de calcium, le sucralose et leurs combinaisons.

14. Composition selon les revendications 11 à 13, dans laquelle la composition comprend en outre un ou plusieurs colorants.

15. Composition selon la revendication 11, dans laquelle le substrat comestible comprend une base de gomme à mâcher.

16. Composition selon la revendication 11, comprenant en outre la disposition d'un ou plusieurs composés supplémentaires sur le substrat.

17. Composition selon la revendication 16, dans laquelle le ou les composés supplémentaires sont choisis dans le groupe constitué d'arômes, de modificateurs d'arôme, de préparations médicinales, de dentifrices, de conservateurs et de colorants.
